(19) Europäisches Patentamt
European Patent Office
Office européen des brevets

(11) EP 1 596 552 A2

(12) **EUROPÄISCHE PATENTANMELDUNG**

(43) Veröffentlichungstag:
16.11.2005 Patentblatt 2005/46

(51) Int Cl.7: **H04L 27/38**

(21) Anmeldenummer: 05006127.4

(22) Anmeldetag: 21.03.2005

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **12.05.2004 DE 102004023889**

(71) Anmelder: **Micronas GmbH**
**79108 Freiburg (DE)**

(72) Erfinder:
• **Bock, Christian, Dr.**
**79108 Freiburg (DE)**
• **Noeske, Carsten, Dipl.-Ing.**
**79350 Sexau (DE)**

(74) Vertreter: **Patentanwälte**
**Westphal, Mussgnug & Partner**
**Am Riettor 5**
**78048 Villingen-Schwenningen (DE)**

(54) **Verfahren und Schaltungsanordnung zum Bestimmen der Frequenz eines empfangenen Signals**

(57) Die Erfindung bezieht sich auf ein Verfahren und eine Schaltungsanordnung zum Bestimmen der Trägerfrequenzdifferenz beim Demodulieren von empfangenen Symbolen (P1, P2) im komplexen Phasenraum (I, Q; R, α) eines Quadraturmodulationsverfahrens (QAM), bei dem zur Frequenzbestimmung die empfangenen Symbole mit Symbolen (S1, S2) auf Sollpositionen im komplexen Signalraum verglichen werden. Um die Bestimmung unabhängig von einer Rotation des Koordinatensystems der empfangenen Signale gegenüber dem Koordinatensystem der Symbole zu machen, wird vorgeschlagen, den Winkel ($\angle$(P1, P2)) zwischen zwei empfangenen Signalwerten (P1, P2) zu bestimmen und mit möglichen Sollwinkeln des Quadraturmodulationsverfahrens zu vergleichen. Eine Winkelabweichung zwischen dem bestimmten Winkel der empfangenen Signalwerte und dem Sollwinkel kann als direktes Maß für eine Frequenzabweichung ($\Delta$f) verwendet werden.

FIG 2

**Beschreibung**

Die Erfindung bezieht sich auf ein Verfahren zum Bestimmen der Frequenz zum Demodulieren von empfangenen Symbolen bzw. Signalanteilen im komplexen Phasenraum eines Quadraturmodulationsverfahrens mit den oberbegrifflichen Merkmalen des Patentanspruchs 1 bzw. auf eine Schaltungsanordnung zum Durchführen eines solchen Verfahrens.

Die richtige Bestimmung der Frequenz, d. h. der Trägerfrequenz, ist für eine Synchronisation eines Empfängers bzw. einer empfangenden Schaltungsanordnung für den Empfang von digitalen, mit einem Quadratursignalpaar gekoppelten Signalen ein bedeutender Faktor.

Die Symbole stellen in codierter Form einen ein- oder mehrstelligen Digitalwert dar. Die Codierung erfolgt für die Übertragung über das Quadratursignalpaar, das einem Zeiger entspricht, der zu bestimmten Zeitpunkten diskrete Positionen im kartesischen Amplituden- und Phasenraum des Quadratursignalpaares einnimmt. Übliche derartige Übertragungsverfahren sind QAM (Quadrature Amplitude Modulation) und PSK (Phase Shift Keying).

In einem üblichen Empfänger zum Empfang digitaler Signale mischt ein komplexer Multiplizierer oder Mischer, der von einem Lokaloszillator angesteuert wird, das empfangene, auf einen Träger modulierte QAM-Signal frequenz- und phasenrichtig in das Basisband der Schaltungsanordnung. Die Schaltungsanordnung weist dazu üblicherweise eine phasengekoppelte Schleife zur Regelung auf. Bei einer digitalen Verarbeitung kann dies vor oder nach einer A/D-Umsetzung (A/D: Analog/Digital) erfolgen. Das Signal wird entweder mit dem Symboltakt oder einem Vielfachen davon abgetastet und digitalisiert, oder der Digitalisierungstakt ist gegenüber dem erforderlichen Symboltakt freilaufend. In diesem Fall wird das Signal über eine rein digitale Abtastratenwandlung auf dem Symboltakt oder ein Vielfaches davon umgesetzt. Verstärkungsregelungen sorgen dafür, dass der jeweilige Aussteuerbereich ausgenutzt wird und dass die empfangenen Signale richtig auf die Symbolentscheiderstufe abgebildet werden. Ein adaptiver Entzerrer (Equalizer) vermindert die Intersymbolinterferenz, die in linearen Verzerrungen des Senders, der Übertragungsstrecke oder des Empfängers ihren Ursprung hat.

Bei hochwertigen Demodulatoren für QAM- oder PSK-Signale benötigen die Regelschaltungen für die Frequenz- und Phasenregelung des Lokaloszillators, für die Verstärkungsregelung, für die Rückgewinnung des Symboltaktes und für den adaptiven Entzerrer sowohl die empfangenen Symbole als auch die Elemente des vorgegebenen Symbolalphabets, die von einer Entscheiderstufe als wahrscheinlichste angesehen werden. Diese Art der Regelung über das entschiedene Signal wird als "entscheidungsrückgekoppelte" Regelung bezeichnet.

Da bei den digitalen Demodulatoren nach dem Stand der Technik die entscheidungsrückgekoppelten Regelungen miteinander verkoppelt sind, ist das Einrasten schwierig, solange die Regelung für den Lokaloszillator, der das Empfangssignal in das Basisband mischt, frequenz- und phasenmäßig noch nicht stabil ist. Oft gelingt das Einrasten nur, wenn die jeweiligen Frequenzen und Phasen relativ dicht bei ihren Sollwerten liegen.

Demodulatoren für QAM- oder PSK-Signale benutzen üblicherweise eine Phasenregelung, welche die empfangenen und abgetasteten komplexen Signalwerte mit Koordinaten im Signalraum, die Symbolen zugeordnet sind, vergleicht. Dabei werden meistens äquidistante Entscheidungsschwellen jeweils in I- und Q-Richtung des komplexen Signalraums benutzt. Einem empfangenen Phasenpunkt wird der Sollpunkt eines Symbols zugeordnet, welcher den Mittelpunkt eines I/Q-Entscheidungsquadrates darstellt, welches in der komplexen I/Q-Ebene aufgespannt ist.

Ein Verfahren, welches anstelle der quadratischen Entscheidungsfelder solche mit Radien und Sektoren verwendet, ist aus DE 36 19 744 bekannt. Bei EP 0 281 652 werden erst Gruppen von eng beieinander liegenden Radien bestimmt, woraufhin dann in einem Folgeschritt der geeignetste passende Phasenwinkel auf einem der in Frage kommenden Radien bestimmt wird. Entscheidungseinrichtungen mit einer eingeschränkten Symbolauswahl (reduced constellation) werden in US 5,471,508 verwendet, um Fehldrehungen bei höherwertigen Modulationsarten zu vermeiden.

Bei den bekannten Verfahren ist der Phasenfangbereich, insbesondere bei höherwertigen Modulationen, sehr gering. Solange jedoch die Trägerphasenregelung der Schaltungsanordnung nicht eingerastet ist, sind die entschiedenen Symbole oftmals nicht korrekt, wodurch bei bestimmten Symbolen eine falsche Drehrichtung errechnet wird. Wird das Summensignal aller Korrektursignale über der Phasenabweichung dargestellt, so ergeben sich bei höherwertigen Modulationsverfahren ungewollte Nullstellen, welche zu einem fehlerhaften Einrasten führen.

Bekannt sind verschiedene Verfahren zum Vergrößern des Fangbereichs und zum Vermeiden von falschen Nullstellen des Summenkorrektursignals. Dabei wird in beispielsweise US 5,471,508, EP 0571788, DE 36 19 744, DE 41 00 099, DE 44 10 607, DE 199 28 206 jedoch stets von festen Sollkoordinaten der Symbole im Signalraum ausgegangen. Der Phasenfangbereich kann nicht ohne besondere logische Maßnahmen gemäß beispielsweise EP 0571788 erweitert werden.

Alle Maßnahmen zur Vergrößerung des Phasenregelbereichs haben jedoch nur geringe Verbesserungen bei der anfänglich oft notwendigen Ausregelung einer Frequenzdifferenz zwischen Eingangssignal und lokalem Oszillator zur Folge und lösen das Problem einer notwendigen Frequenzregelung nicht grundsätzlich.

Eine solche Frequenzdifferenz bedeutet eine Rotation des Koordinatensystems des Eingangssignals relativ zum Koordinatensystem der Schaltungsanordnung mit ständig wechselndem Phasenoffset.

Soll eine Frequenzdifferenz ausgeregelt werden, muss die Schleifenverstärkung der Trägerregelung so hoch eingestellt werden, dass die Phase nach einem korrekten Nulldurchgang, bei dem keine Phasendifferenz zwischen Eingangssignal und lokalem Oszillator besteht, innerhalb des kleinen Bereichs, in dem der Entscheider nur oder überwiegend richtige Entscheidungen liefert, eingefangen und festgehalten werden, d. h. der lokale Oszillator muss auf die korrekte Frequenz und Phase gebracht werden. Die notwendige Stabilität der Regelschleife begrenzt jedoch die mögliche Schleifenverstärkung.

Die Aufgabe der Erfindung besteht darin, ein Verfahren zum Bestimmen der Frequenz eines empfangenen Signals zum Demodulieren von empfangenen Symbolen bzw. Signalanteilen im komplexen Signalraum eines Modulationsverfahrens mit besserer Wirkungsweise bzw. eine Schaltungsanordnung zum Durchführen eines solchen Verfahrens vorzuschlagen.

Diese Aufgabe wird durch das Verfahren zum Bestimmen der Frequenz eines empfangenen Signals zum Demodulieren von empfangenen Symbolen bzw. Signalanteilen im komplexen Signalraum eines Modulationsverfahrens mit den Merkmalen des Patentanspruchs 1 bzw. die Schaltungsanordnung mit den Merkmalen des Patentanspruchs 13 gelöst.

Bei einem Verfahren zum Bestimmen der Frequenz eines empfangenen Quadraturmodulationssignals wird davon ausgegangen, dass zur Frequenzregelung empfangene Signale mit Sollpositionen von Symbolen im komplexen Signalraum verglichen werden. Um die Bestimmung einer Frequenzdifferenz einfacher und genauer durchzuführen, ist es vorteilhaft, von zumindest zwei empfangenen Signalwerten den Winkel zwischen diesen als Empfangswinkel zu bestimmen, diesen Winkel mit für das verwendete Quadraturmodulationsverfahren möglichen Winkeln zwischen entsprechenden Sollpositionen als Sollwinkel zu vergleichen und dem nächstkommenden Sollwinkel zuzuordnen. Die Winkelabweichung zwischen dem Empfangswinkel und dem nächstkommenden Sollwinkel ist ein Maß für die Frequenzdifferenz zwischen Eingangssignal und lokalem Oszillator der Schaltungsanordnung.

Das Verfahren beruht somit darauf, dass anstelle der Abweichung der empfangenen Signalwerte von festen Sollsymbolen nunmehr Differenzwinkel betrachtet werden. Daher ist die augenblickliche Winkellage des empfangenen Signalraums irrelevant. Er kann gegenüber dem Sollkoordinatensystem beliebig gekippt sein oder innerhalb bestimmter Grenzen auch rotieren. In jedem Fall wird innerhalb des dadurch möglichen sehr großen Frequenzfangbereiches ein richtiges Frequenzkorrektursignal erzeugt. Fangbereich und Fangsicherheit können dabei durch Verkettungsmaßnahmen weiter erhöht werden.

Natürlich ist eine solche Verfahrensweise fortlaufend ausführbar, indem kontinuierlich bei jedem Takt oder bei jeder vorgegebenen Anzahl verstrichener Takte eine erneute Variation vorgenommen wird.

Vorteilhafte Ausgestaltungen sind Gegenstand abhängiger Ansprüche.

Vorteilhafterweise wird der Empfangswinkel zu aufeinanderfolgend empfangenen Signalwerten bestimmt und mit entsprechenden möglichen Sollwinkeln verglichen. Eine fortlaufende Ausführung dieses Verfahrens an direkt oder in vorgegebenen Abständen aufeinanderfolgenden Signalwerten identifiziert damit das ältere der an der Differenzbildung beteiligten Symbole durch die vorherige Winkelbestimmung und ermöglicht durch die dadurch entstehende Eingrenzung der Differenzkombinationen der Sollwinkel ein robusteres und beschleunigtes Suchverfahren.

Diese Verkettung kann auch über mehrere Symbole gehen und nach Art des Viterbi-Algorithmus das wahrscheinlichste neue Symbol bestimmen.

Zweckmäßig ist auch, anhand der detektierten Radien der beteiligten Signalwerte und deren Zuordnung zu Sollradien die infrage kommenden Sollwinkel einzugrenzen, da an deren Bildung nur solche Symbole beteiligt sein können, die auf den betreffenden Sollradien liegen. Dabei wird ausgenutzt, dass die radiale Komponente des empfangenen Signals nicht von Frequenz- oder Phasenoffsets abhängig ist. Zweckmäßig ist entsprechend, den Winkel zu Signalen im Bereich verschiedener für das Quadraturmodulationsverfahren möglicher Radien zu bestimmen und mit entsprechend möglichen Sollwinkeln zu vergleichen.

Vorteilhaft ist auch, den Winkel zu Signalwerten auf im Symbolalphabet am eindeutigsten bestimmbaren Radien zu bestimmen. Dies schließt falsche Zuordnungen zu Symbolen auf eng benachbarten Radien, beispielsweise den Radien 2 - 4 bei einem 64-QAM-Verfahren, aus. Vorteilhaft ist beispielsweise die Bestimmung auf dem ersten und dem sechsten Radius bei 64 QAM, da beide Radien keine eng benachbarten Radien aufweisen und zwischen den entsprechenden Symbolen ein besonders geeigneter Winkel besteht.

Vorteilhaft ist auch, nur Empfangswinkel von Signalen zuzulassen, die Sollwinkeln im Bereich von Positionen ausgewählter Symbole zuzuordnen sind. Dadurch kann sichergestellt werden, dass möglichst nur solche Signale zur Winkelbestimmung verwendet werden, welche mit Blick auf benachbarte Symbole, Radien usw. sowie auch das Winkelverhältnis besonders sicher analysierbar sind. Vorteilfaft ist entsprechend ein Verfahren, bei dem der bestimmte Winkel zu empfangenen Signalwerten im Bereich von Positionen ausgewählter Sollsymbole bestimmt wird.

Vorteilhaft ist auch ein Verfahren, bei dem eine Vielzahl von Winkeln zur gemeinsamen und/oder iterativen Verbesserung der Frequenzbestimmung bestimmt, verglichen und unter gemeinsamer Berücksichtigung zur Bestimmung des Frequenzoffsets verwendet wird. Um falsche Entscheidungen und damit falsche Regelgrößen zu vermeiden, sollten dabei vorteilhafterweise solche Winkelabweichungen zur weiteren Anwendung kommen, die deutlich kleiner sind als die halbe Differenz zwischen dem jeweils zugeordneten Sollwinkel und dem jeweils nächstwahrscheinlichen zu berücksichtigenden Sollwinkel.

Die Bestimmung einer Vielzahl von Winkelabweichungen zwischen Empfangswinkeln und Sollwinkeln ermöglicht durch Mittelung oder Iteration eine Verbesserung der Frequenzbestimmung.

Insbesondere ist es möglich, die fortlaufend bestimmte Abweichung zwischen Empfangswinkeln und Sollwinkeln als Eingangssignal für eine konventionelle Frequenzregelung oder den Integralzweig einer konventionellen Phasenregelung des lokalen Oszillators zu verwenden.

Die Abweichung zwischen Empfangswinkel und Sollwinkel oder ein aus vielen Winkelabweichungen gebildeter verbesserter Wert kann auch zur einmaligen Frequenzkorrektur des lokalen Oszillators verwendet werden, so dass bei nachfolgenden Bestimmungsschritten bereits von einem in der Frequenz korrekten Signal ausgegangen werden kann und lediglich eine Nachregelung zu beispielsweise der weiteren Optimierung oder der Kompensation von Ausreißern notwendig ist.

Insbesondere bei höherstufigen Modulationsverfahren können mehrere Symbole den gleichen Positionswinkel im Koordinatensystem haben. Außerdem können verschiedene weitere Kombinationsmöglichkeiten von Symbolen den gleichen Solldifferenzwinkel bilden. Soll umgekehrt die erfolgte Bestimmung des Sollwinkels zur Identifikation der beteiligten Symbole herangezogen werden, wird diese Mehrdeutigkeit vorzugsweise durch die Verkettung oder die oben beschriebene Zuordnung der empfangenen Signalwerte zu Sollradien oder eine Kombination beider Verfahren beseitigt. Die so identifizierten Symbole können nachfolgenden Stufen zur Verfügung gestellt werden. Damit arbeitet der Demodulator schon, obwohl seine Frequenz- und Phasenregelung noch nicht eingerastet ist.

Vorteilhafterweise können die Winkel aller empfangenen Signalwerte zum Bestimmen des Winkels zwischen diesen in einen einzigen Quadranten der komplexen Ebene abgebildet werden. Dadurch vermindert sich die Anzahl der zu betrachtenden Sollwinkel.

Vorteilhaft ist auch, den Betrachtungsbereich der empfangenen Signale auf Toleranzbereiche um mögliche Sollsymbolpositionen oder vor allem Sollradien zu berücksichtigen, so dass Ausreißer unter den empfangenen Signalen von der weiteren Analyse ausgeschlossen werden und die Bestimmung durch Ausreißer nicht beeinträchtigt wird. Bevorzugt wird ein Verfahren, bei dem empfangene Signalwerte innerhalb von Toleranzbereichen um mögliche Sollradien Radiengruppen zugeordnet werden, mittels derer eine Auswahl von Sollwinkeln definiert wird.

Falls die aus der Differenzwinkelbestimmung gewonnene Information über die Identität der beteiligten Symbole zur weiteren Verarbeitung dieser Symbole verwendet werden soll, wird zweckmäßigerweise nach der Winkelbestimmung in nur einem Quadranten anschließend vor der weiteren Signalverarbeitung eine entsprechende Korrektur durch Rückdrehung der komplexen Symbole in den richtigen Quadranten vorgenommen. Dies erfolgt vorteilhaft durch ein Verfahren, bei dem nach der Winkelbestimmung in nur einem Quadranten anschließend vor der weiteren Signalverarbeitung die Vorzeichen eines bestimmten Symbols wieder passend hinzugefügt werden oder das Symbol wieder in den richtigen Quadranten gedreht wird.

Sobald eine anfänglich vorhandene Frequenzabweichung genügend gut ausgeregelt ist, ermöglicht die aus dem Differenzwinkel abgeleitete Information zur Identifizierung der beteiligten Symbole die Verwendung des absoluten Winkels einer oder vieler Symbole zur Phasenregelung.

Eine Anwendung des Verfahrens bzw. einer entsprechenden Schaltungsanordnung bietet sich insbesondere bei binären oder komplexen digitalen Modulationsverfahren wie PSK (Phase Shift Keying) und QAM (Quadrature Amplitude Modulation) an. Derartige Modulationsverfahren werden von vielen neueren Rundfunk-, Fernseh- und Datendiensten über Kabel, Satellit und teilweise terrestrisch benutzt.

Ein Ausführungsbeispiel wird nachfolgend anhand der Zeichnung näher erläutert. Es zeigen:

Fig. 1     eine Schaltungsanordnung zum Bestimmen von Symbolen aus einem digitalisierten Signal, welches an zumindest ein Quadratursignalpaar eines Modulationsverfahrens gekoppelt ist, wobei die Schaltungsanordnung eine Einrichtung zum Bestimmen der Frequenz des Empfangssignals aufweist;

Fig. 2     eine Darstellung von Signal- und Symbolpositionen in der komplexen Ebene mit Winkelverhältnissen zwischen ausgewählten der Symbole;

Fig. 3     eine Abbildung von möglichen Differenzwinkeln zwischen empfangenen Signalen und Symbolen über dem Winkel,

Fig. 4     ein mögliches Ablaufdiagramm für einen beispielhaften Verfahrensablauf zur Frequenzbestimmung und

Fig. 5, 6  beispielhafte Schaltungsanordnungen für einen Schalter zur Frequenz- bzw. Phasenregelung.

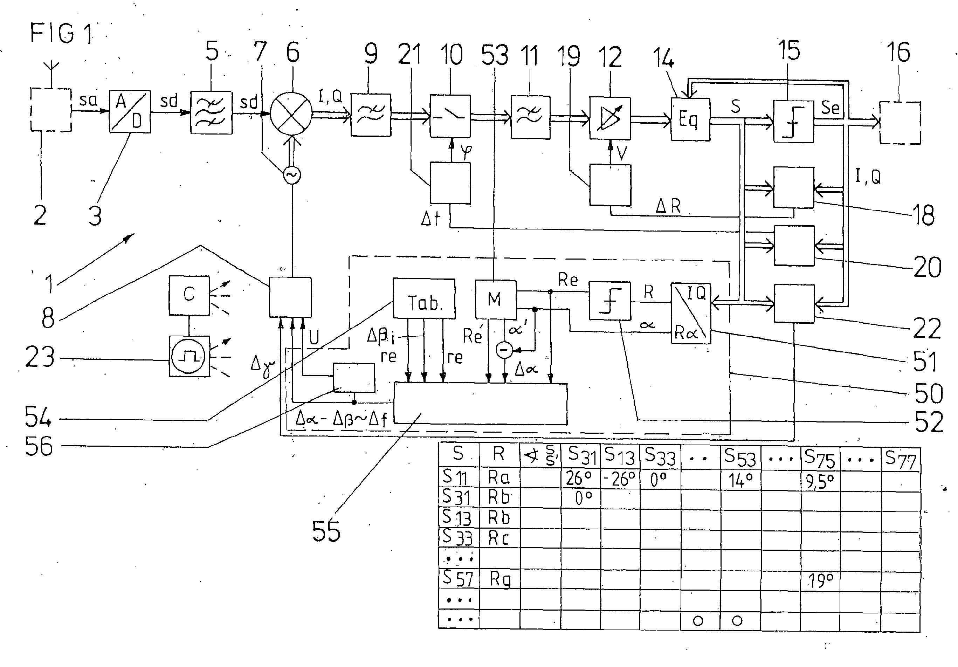

Wie dies aus Fig. 1 ersichtlich ist, besteht ein Demodulator 1 als beispielhafte Schaltungsanordnung zum Bestimmen von Symbolen Se aus einem digitalisierten Signal sd, S, welches an ein Quadratursignalpaar eines Modulationsverfahrens, z. B. gemäß einem QAM-Standard, gekoppelt ist, aus einer Vielzahl von Einzelkomponenten. Diese können alle oder einzeln auch Bestandteil einer integrierten Schaltung sein. Insbesondere sind nachfolgend beschriebene Komponenten je nach Anwendungszweck weglassbar oder um weitere Komponenten ergänzbar. Auch ist die Weiterführung von Signalen als reelle Signale, komplexe Signale oder einzelne komplexe Signalkomponenten je nach Anwendungszweck und spezieller Schaltungsanordnung entsprechend anpassbar.

Bei der dargestellten Ausführungsform empfängt der Demodulator 1 an einem Eingang von einer Signalquelle 2, beispielsweise einem Tuner, ein analoges Signal sa. Dieses analoge Signal sa, welches üblicherweise in einer bandbegrenzten Zwischenfrequenzlage vorliegt, wird einem AD-Umsetzer 3 (AD: Analog/Digital) zum Umsetzen in ein digitales Signal sd zugeführt. Das digitale Signal sd wird vom AD-Umsetzer 3 zu einem Bandpass-Filter 5 geführt, welches das digitale Signal von Gleichanteilen und störenden Oberwellen befreit.

Das vom Bandpass-Filter 5 ausgegebene Signal wird einem Quadraturumsetzer 6 zugeführt, welcher das digitale bzw. digitalisierte Signal sd in das Basisband umsetzt. Das Basisband entspricht den Anforderungen des Demodulators 1 und des verwendeten Modulationsverfahrens. Entsprechend gibt der Quadraturumsetzer das in die beiden Quadratursignalkomponenten I, Q des kartesischen Koordinatensystems aufgesplittete digitalisierte Signal sd aus. Zur Frequenzumsetzung wird der Quadraturumsetzer 6 üblicherweise mit zwei um 90° versetzten Trägern aus einem lokalen Oszillator 7 gespeist, dessen Frequenz und Phase durch eine Trägerregeleinrichtung 8 gesteuert wird. Sie bilden Hauptteile der phasengekoppelten Regelung. Die Quadratursignalkomponenten I, Q werden einem Tiefpass-Filter 9 zugeführt, welches zur Beseitigung störender Oberwellen dient und die Bandbreite des Signals für die nachfolgende Abtastung begrenzt. Das derart gefilterte Quadratursignalpaar I, Q bzw. die beiden Quadratursignalkomponenten I, Q werden dann einer Symbol-Abtasteinrichtung 10 zugeführt, welche eine Abtastregeleinrichtung aufweist. Die Steuerung der Symbol-Abtasteinrichtung 10 erfolgt über einen Eingang, dem das Abtastsignal $t_i$ zugeführt wird. Die Symbol-Abtastzeitpunkte $t_i$ orientieren sich im normalen Betriebszustand an der Symbolrate 1/T oder einem Vielfachen davon und üblicherweise auch an der genauen Phasenlage des empfangenen digitalen Signals sd. Durch das Tiefpass-Filter 9 und die Symbol-Abtasteinrichtung 10 erfolgt eine zeitliche Interpolation zwischen den Abtastwerten vom AD-Umsetzer 3 zu einem Takt auf der Symbolrate oder einem ganzzahligen Vielfachen davon.

Das Ausgangssignal der Abtasteinrichtung 10 wird mittels eines Tiefpass-Filters 11 mit einer Nyquist-Charakteristik gefiltert und einer rückgekoppelten Verstärkungsregeleinrichtung 12 mit einer Steuereinrichtung 19 zugeführt. Die Steuerung der Verstärkungsregeleinrichtung 12 dient dazu, den Aussteuerbereich eines Symbolentscheiders 15 optimal auszunutzen. Das von der Verstärkungsregeleinrichtung 12 ausgegebene Signal wird zuvor einem Entzerrer (Equalizer) 14 zugeführt. Der Entzerrer 14 befreit die beiden Komponenten des Quadratursignalpaars I, Q von störenden Verzerrungen und stellt ein Signal S an seinem Ausgang bereit. Nachfolgend werden aus derart bereitgestellten Signalen mittels des Symbolentscheiders 15 Symbole Se gebildet.

Diese Symbole Se werden dann weiteren digitalen Signalverarbeitungseinrichtungen 16, die Signale S und die Symbole Se den entscheidungsrückgekoppelten Regelkreisen bzw. Komponenten im Demodulator 1 direkt oder indirekt zugeführt. Derart mit den Symbole Se versorgt werden insbesondere der Entzerrer 14, die Verstärkungsregeleinrichtung 12, deren Steuereinrichtung 19, die Trägerregeleinrichtung 8 und die Symbol-Abtasteinrichtung 10. Diese Regelkreise werden dabei je nach Schaltungsanordnung mit beiden Quadratursignalkomponenten I, Q des Signals S oder Symbols Se in kartesischen Koordinaten oder in polaren Koordinaten versorgt.

Die Verstärkungs-Regeleinrichtung 12 wird von der Verstärkungs-Steuereinrichtung 19 angesteuert, welcher ein Signal zugeführt wird, welches die Radiusdifferenz repräsentiert, die in einer Radius-Vergleichseinrichtung 18 bestimmt wird. Der Radius-Vergleichseinrichtung 18 werden zum Radiusvergleich das Signal S vor der Zuführung zum Symbolentscheider und zusätzlich das im Symbolentscheider 15 entschiedene Symbol Se zugeführt.

Die Verstärkungs-Regeleinrichtung 12 bekommt somit einen Verstärkungsfaktor V zugeführt, welcher von der Verstärkungs-Steuereinrichtung 19 aus einem Radienfehler ΔR bereitgestellt wird, wobei die Verstärkungs-Steuereinrichtung 19 vorzugsweise als PI-Regler ausgebildet ist.

Alternativ kann auch eine Verstärkungs-Regeleinrichtung 12 bereitgestellt werden, welche sich selber durch einen Vergleich von Eingangssignal und Ausgangssignal unter Verwendung von eingespeicherten Referenzparametern regelt. Dies bietet den Vorteil, dass die Radius-Vergleichseinrichtung 18 und die Verstärkungs-Steuereinrichtung 19 ganz entfallen bzw. anteilig in der Verstärkungs-Regeleinrichtung 12 aufgenommen werden können. Außerdem wird bei einer solchen Anordnung vermieden, dass in die Regelschleife zwei unabhängige Regelungen eingehen, nämlich eine Verstärkungsregelung in der Verstärkungs-Regeleinrichtung 12 und eine weitere Regelung in dem Entzerrer 14.

Das Signal S und das Symbol Se, welche vor bzw. hinter dem Symbolentscheider 15 abgegriffen werden, werden außerdem einer Zeitfehler-Bestimmungseinrichtung 20 zugeführt. Die Zeitfehler-Bestimmungseinrichtung 20 bestimmt den Taktfehler, der allgemein als Timing-Fehler $\Delta t$ bezeichnet wird, in für sich bekannter Art und Weise. Dieser Timing-Fehler $\Delta t$ wird einer Abtasteinrichtungs-Steuereinrichtung 21 zugeführt, welche vorzugsweise als PI-Regler ausgebildet ist. Die resultierende Regelspannung wird dann der Abtasteinrichtung 10 zugeführt, welche das Eingangssignal sd nach dessen Umsetzung in die kartesischen Koordinaten I, Q abtastet.

Außerdem werden das Signal S und das Symbol Se, die vor bzw. hinter dem Symbolentscheider 15 abgegriffen werden, einer Winkelfehler-Bestimmungseinrichtung 22 zugeführt, welche einen Winkelfehler $\Delta\gamma$ bestimmt, welcher der Trägerregeleinrichtung 8 als P- und I-Anteil für die Ansteuerung des lokalen Oszillators 7 zugeführt wird.

Der Trägerregeleinrichtung 8 werden neben dem Winkelfehler $\Delta\gamma$ ein Frequenzoffset $\Delta f$ sowie vorteilhafterweise ein Umschaltsignal U zugeführt. Das Umschaltsignal U und der Frequenzoffset $\Delta f$ werden dabei von einer Frequenz-Bereitstellungseinrichtung 50 geliefert.

Die Frequenz-Bereitstellungseinrichtung 50 weist einen Eingang auf, dem das empfangene und vorverarbeitete Signal S im komplexen kartesischen Koordinatenraum I, Q zugeführt wird. Bei dem dargestellten Ausführungsbeispiel wird dieses Signal durch einen Koordinatenumsetzer 51 in polare Koordinaten R, $\alpha$ umgesetzt, wobei die Radialkomponente einem weiteren Symbolentscheider 52 zugeführt wird. Die von diesem Symbolentscheider 52 ausgegebene radiale Komponente Re sowie die Winkelkomponente $\alpha$ des Koordinatenumsetzers 51 werden einem Speicher 53, M zugeführt. Die entschiedene Radialkomponente Re dieses Entscheiders 52 wird außerdem einer Vergleichereinrichtung 55 zugeführt. Der Vergleichereinrichtung 55 werden außerdem die entschiedene Radialkomponente Re' aus dem Speicher sowie eine Differenz-Winkelkomponente $\Delta\alpha$ der Differenz aus dem Winkelanteil $\alpha$ des Koordinatenumsetzers 51 und des Winkelanteils $\alpha'$ aus dem Speicher M zugeführt.

In diesem weiteren Entscheider 52 findet eine Entscheidung bezüglich des Radius oder von Radiusgruppen statt. Alternativ können alle Radien oder kein Radius zugelassen werden. Die letzte bestimmte Radiusmenge und der letzte bestimmte Winkel oder mehrere der letzten bestimmten Radienmengen und Winkel werden in dem Speicher M, 53 gespeichert.

In einer Tabelle 54, die als weiterer Speicher oder als weiterer Speicherabschnitt in dem Speicher 53 ausgebildet ist, sind alle vorkommenden Differenzwinkel mit zugehörigen Radienpaaren der zum Symbolalphabet gehörenden Symbole hinterlegt. Die Tabelle 54 bzw. der weitere Speicherabschnitt in dem Speicher 53 dienen somit als eine Sollwinkel- und/oder Sollradien-Bereitstellungseinrichtung. Diese Sollwerte, eine aktuelle Radiusmenge re, ein aktueller Differenzwinkel $\Delta\beta$ und eine Radiusmenge re', welche einen vorausgegangenen Radiuswert repräsentiert, werden aus der Tabelle 54 der Vergleichereinrichtung 55 zugeführt. Die Vergleichereinrichtung 55 vergleicht alle vorkommenden Differenzwinkel mit zugehörigen Radienpaaren der Sollsymbole mit den entsprechenden Werten in der Tabelle 54. Dabei sucht die Vergleichereinrichtung 55 wahrscheinlichste Solldifferenzwinkel $\Delta\beta$ für den bestimmten bzw. gemessenen Ist-Differenzwinkel $\Delta\alpha$ unter Berücksichtigung eines Vergleichs der entschiedenen Radien Re, Re' mit möglichen Kombinationen re, re' aus der Tabelle 54. Dabei sind vorteilhafterweise übergreifende Entscheidungen über mehr als einen Symbolabstand möglich. Vorteilhafterweise wird auch die Verwerfung des Ergebnisses bei zu großer Unsicherheit, d. h. Über- oder Unterschreiten von Grenzwerten, zugelassen. Ausgegeben wird ein Frequenzfehler bzw. Frequenzoffset $\Delta f$ als Ergebnis des Differenzwinkels zwischen dem bestimmten Ist-Differenzwinkel $\Delta\alpha$ aus dem Koordinatenumsetzer 20 und dem zuvor gespeicherten Wert des Speichers 53 einerseits und andererseits dem wahrscheinlichsten Soll-Differenzwinkel $\Delta\beta$ aus der Tabelle 54, so dass für den Frequenzfehler gilt $\Delta f = f_{Symbol} \cdot (\Delta\alpha - \Delta\beta)/2\pi$. Dieser Frequenzfehler $\Delta f$ wird der Trägerregeleinrichtung 8 zugeführt.

Vorteilhafterweise wird dieser Frequenzfehler $\Delta f$ auch einem Umschalter 56 zugeführt, welcher die Größe des Frequenzfehlers $\Delta f$ überwacht. Bei üblicherweise anfänglich großem Frequenzfehler $\Delta f$ wird der Frequenzfehler $\Delta f$ als Steuergröße für die Trägerregeleinrichtung 8 genommen. Sobald $\Delta f$ sehr klein geworden ist, vorzugsweise unterhalb eines Schwellenwertes liegt, wird der Winkelfehler $\Delta\gamma$ verwendet, welcher aus der üblichen und für sich bekannten Entscheidungsverfahrensweise bzw. der Winkelfehler-Bestimmungseinrichtung 22 stammt.

Eine bevorzugte Trägerregeleinrichtung 8 ist als PI-Regler ausgebildet. Gemäß einer einfachen Ausführungsform wird das Umschaltsignal U des Umschalters 56 ein einfaches Umschalten von dem Frequenzoffset bzw. Frequenzfehler $\Delta f$ auf den Winkelfehler $\Delta\gamma$ an dem Eingang des PI-Glieds (PI: Proportionaler und Integraler Signalanteil).

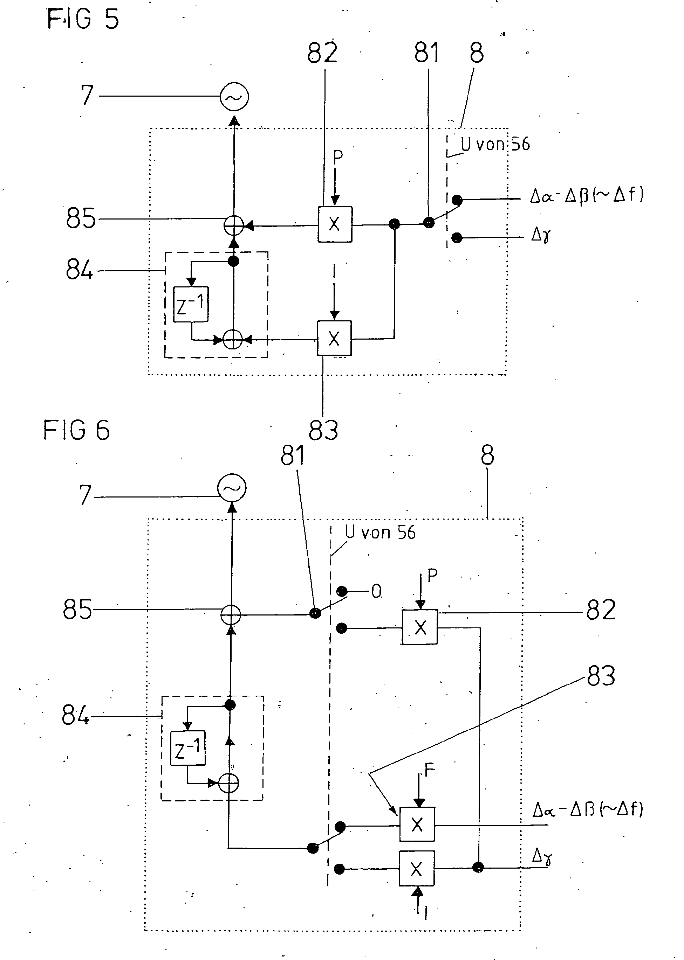

Bei der beispielhaft in Fig. 5 dargestellten Ausführungsform der Trägerregeleinrichtung 8 wird einem in dieser befindlichen Umschalter das Umschaltsignal U des Umschalters 56 zugeführt. Der Schalter 81 schaltet dabei zwischen den beiden Eingangssignalen um und legt diese an einen Multiplikator 82 zum Multiplizieren eines P-Anteils und an einen Multiplikator 83 zum Multiplizieren eines I-Anteils. Das Ausgangssignal des I-Multiplikators 83 wird einem Integrator 84 zugeführt, dessen Ausgangssignal einem Addierer 85 zugeführt wird, an dessen zweiten Eingang das Ausgangssignal des P-Multiplizierers 82 zugeführt wird. Das Ausgangssignal dieses Addierers 85 wird als Steuersignal dem lokalen Oszillator 7 zugeführt.

Gemäß einer bevorzugteren Ausführungsform, die in Fig. 6 dargestellt ist, wird der Frequenzoffset bzw. Frequenzfehler Δf, welcher gleich oder proportional zu dem bestimmten Winkelfehler Δα-Δβ ist, direkt dem I-Glied der Trägerregeleinrichtung 8 zugeführt und mit einem eigenen Koeffizienten F multipliziert. Der Winkelfehler Δγ wird sowohl dem I-Glied als auch dem P-Glied zugeführt und mit einem I-Wert bzw. einem P-Wert multipliziert. Das Umschaltsignal U des Umschalters 56 liegt an einem Schalter 81' an, welcher in einer ersten Schaltstufe zwischen dem P-multiplizierten Anteil und einer Leerstellung schaltet, und welcher in einer zweiten Schaltstufe zwischen dem I-multiplizierten Winkelfehler Δγ und dem mit dem Koeffizienten F multiplizierten Frequenzoffset Δf umschaltet. Wie bei der vorstehend beschriebenen Trägerregeleinrichtung wird der geschaltete Ausgangswert mit dem I-Anteil wiederum einem Integrator 84 und darüber einem Addierer 85 zugeführt, welcher an dem zweiten Eingang den geschalteten P-Anteil oder ein Null-Signal angelegt bekommt. Dessen Ausgangssignal wird wiederum dem lokalen Oszillator 7 zugeführt.

Um die Schaltungsanordnung 1 zu steuern und mit einem Basistakt zu versorgen, weist sie neben weiteren für den Betrieb erforderlichen Komponenten insbesondere einen Taktgenerator 23 und eine Steuereinrichtung C auf.

Während eine Schaltungsanordnung mit einer Umsetzungseinrichtung 6 zum Umsetzen des digitalen Signals in den komplexen kartesischen Raum I, Q und einem Umsetzer 51 zum Umsetzen in polare Koordinaten beschrieben sind, sind auch Schaltungsanordnungen möglich, bei denen bereits der erste Umsetzer das digitale Signal sd in ein komplexes Signal mit polaren Koordinaten α, R umsetzt. Insbesondere kann der Koordinatenumsetzer 51 ggfs. auch ganz entfallen, wenn die entsprechenden weiteren Komponenten der Schaltungsanordnung zum entsprechenden Verarbeiten des komplexen Signals im kartesischen Koordinatenraum I, Q ausgelegt sind.

In dem Koordinatenumsetzer 51 wird aus dem zugeführten komplexen Signal im kartesischen Koordinatensystem, d. h. einem abgetasteten Quadratursignalpaar I, Q, eine Umsetzung in die Polarkoordinaten R, α gebildet. Mit den Polarkoordinaten werden somit eine Radiuskomponente R und eine Winkelkomponente α gemäß $I = R \cdot \cos(\alpha)$ und $Q = R \cdot \sin(\alpha)$ und gemäß den Beziehungen $R = \sqrt{(I^2 + Q^2)}$ und $\alpha = \arctan(Q/I)$ gebildet.

Alternativ können auch Koordinatenumsetzer anderer Art verwendet werden. Bei der digitalen Signalverarbeitung wird dazu häufig das sogenannte Cordic-Verfahren verwendet, bei dem für die Umwandlung nur Additionen und Zweier-Multiplikationen, welche bei Binärzahlen durch einfache Stellenverschiebungen zu realisieren sind, verwendet werden. Alternativ sind auch andere Näherungsverfahren oder die Verwendung von Tabellen möglich. Die inverse Umsetzung, also die Umsetzung von polaren Signalkomponenten R und α, in ihre Quadraturkomponenten I bzw. Q kann ebenfalls mit einem Cordic-Umsetzer, einer Tabelle oder einem Näherungsverfahren erfolgen.

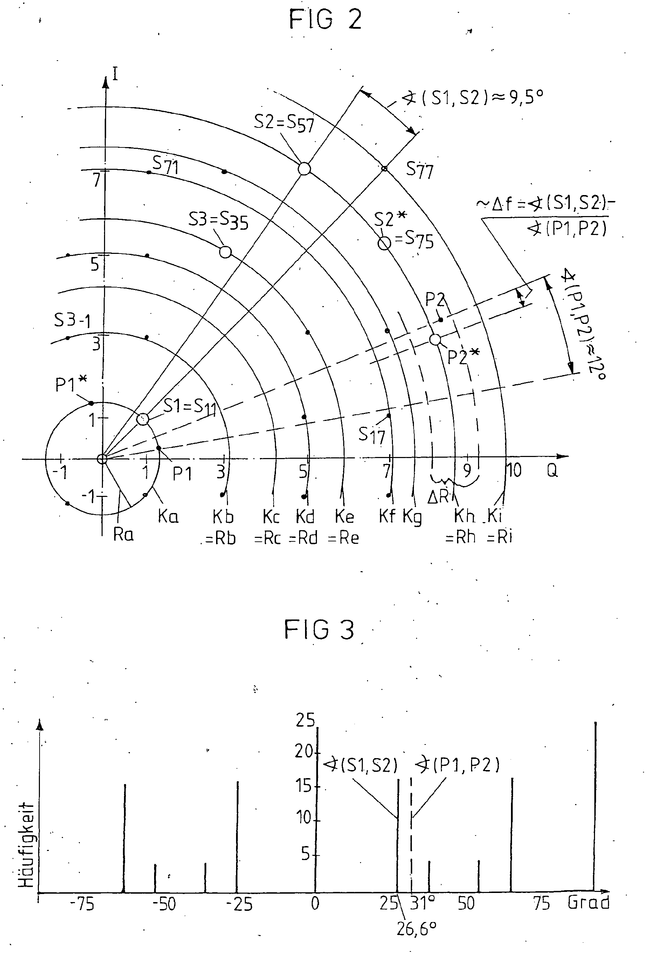

Vor der Beschreibung des Verfahrensablaufs zum Bestimmen der Frequenz bzw. Trägerfrequenz zum Demodulieren des empfangenen Signals mit Symbolen Se wird nachfolgend anhand Fig. 2 die Verteilung von Symbolen im komplexen kartesischen Raum I, Q mit den Koordinaten x, y beschrieben. Dargestellt sind auch die entsprechenden Koordinaten R, α im polaren Koordinatenraum.

Die von einem Quadratursignalpaar I, Q aufgespannte kartesische Koordinatenebene stellt Symbole $S_{xy}$ eines 64-QAM-Signals dar, deren entsprechende Positionen eines Quadranten eingezeichnet sind. Die Indices x,y entsprechen dabei den jeweiligen kartesischen Koordinaten, bei denen die Symbole bei idealer Abtastung zu ermitteln wären. Dargestellt sind auch neun Kreise Ka, Kb, Kc,..., Ki, auf welchen die Symbole $S_{xy}$ gemäß den Vorgaben des 64-QAM-Verfahrens liegen. Den Kreisen Ka, Kb, Kc sind vom Koordinatenursprung aus gerechnet Radiuswerte $R_a = 1,41$; $R_b = 3,16$ bzw. $R_c = 4,24$ zugeordnet. Zur Definition der Symbole $S_{xy}$ über ihre Polarkoordinaten R, α sind die jeweiligen Winkelkomponenten α erforderlich. Diese betragen beispielsweise für die Symbole $S_{11}$ und $S_{33}$ 45° und für die Symbole $S_{13}$ und $S_{31}$ 71,7° bzw. 18,3°. Die Berechnung der Polarkoordinaten erfolgt in der vorstehend beschriebenen Schaltungsanordnung in dem Koordinatenumsetzer 51. Zur Betrachtung von Winkelverhältnissen zwischen einzelnen Symbolen ist die Umsetzung in die Polarkoordinaten besonders zweckmäßig.

Fig. 2 stellt beispielhaft zwei Sollsymbole S1 und S2 auf den Sollpositionen $S_{11}$ bzw. $S_{57}$ im kartesischen Koordinatensystem dar. Vom Ursprung aus sind durchgezogene Linien zu diesen Sollpositionen geführt. Der Winkel zwischen den Linien ergibt den Sollwinkel $\angle(S_{xy}, S_{x'y'})$.

In der im Speicher 54 hinterlegten Tabelle (Fig. 1) sind die Sollwinkel $\angle(S_{xy}, S_{x'y'})$, z. B. $\angle(S1, S2)$ zwischen allen möglichen Sollpositionen der verschiedenen Symbole aufgelistet. Vorteilhafterweise ist jedem Symbol auch die Information zugeordnet, auf welchem Radius Ra, Rb, .... Ri das Symbol angeordnet ist. Alternativ zu einer großen Tabelle mit vorzugsweise allen möglichen Winkelkombinationen für die Sollwinkel können natürlich auch die Ortswinkelangaben für alle Symbolpositionen angegeben werden, so dass für jede beliebige Kombination durch eine einfache Differenzbildung der zugeordnete Sollwinkel bestimmt werden kann.

Bei dem nachfolgend beschriebenen Verfahren wird davon ausgegangen, dass zwischen festen Symbolen S1, S2 feste Differenzwinkel $\angle(S1, S2)$ bestehen. Die augenblickliche Winkellage eines empfan-

genen Signalraumes gegenüber dem Koordinatensy-stem mit den Sollsymbolen kann als irrelevant betrachtet werden, da auch innerhalb des empfangenen Signalraumes diese Winkelbeziehung zwischen einzelnen empfangenen Signalwerten in dem gleichen Verhältnis steht wie die Sollwinkel zwischen den Sollsymbolen. Die Betrachtung der Empfangswinkel $\angle$(P1, P2) zwischen den Positionen zweier empfangener Signalwerte P1 bzw. P2 entsprechen somit unabhängig von der momentanen Raumlage des empfangenen Signalraumes am wahrscheinlichsten einem entsprechenden Sollwin-kel $\angle$(S1, S2) zwischen zwei entsprechenden Symbolen S1, S2.

Dadurch, dass statt absoluter Winkellagen nur Differenzwinkel $\angle$(P1, P2) zwischen zwei empfangenen Signalwerten P1, P2 und einem Sollwinkel $\angle$(S1, S2) zweier entsprechender Symbole S1, S2 betrachtet werden, besteht ein sehr großer Fangbereich, um ein richtiges Frequenzkorrektursignal für die Trägerfrequenz zu erzeugen. In Fig. 2 ist die entsprechende Linie zu den empfangenen Symbolen P1, P2 zur Unterscheidung gestrichelt dargestellt.

Während der Sollwinkel $\angle$(S1, S2) bzw. $\angle$($S_{11}$, $S_{57}$) gemäß dem Tabelleneintrag beispielsweise 9,5 ° beträgt, ist jedoch der gemessene Winkel $\angle$(P1, P2) zwischen den empfangenen Signalwerten P1 und P2 12°. Bei einer Betrachtung der für das vorliegende 64-QAM-Modulationsverfahren möglichen Winkelverhältnisse gibt innerhalb eines Toleranzbereiches für ei-nen Differenzwinkel $\angle$(P1, P2) auch andere mögliche Symbolkombinationen an. Beispielsweise beträgt der Sollwinkel $\angle$(S1,S3) bzw. $\angle$($S_{11}$, $S_{35}$) zwischen dem Symbol $S_{11}$ und dem Symbol S3 bzw. $S_{35}$ 14°. Innerhalb eines Toleranzbereiches ist, wie dem Beispiel entnehmbar ist, noch keine zwingend eindeutige Zuordnung des Winkels $\angle$(P1, P2) der empfangenen Signalwerte P1 und P2 zu einem Sollwinkel möglich.

Vorteilhafterweise kann bei nicht ausreichend eindeutigen Zuordnungsmöglichkeiten als weiteres Kriterium der Radius R der empfangenen Signalwerte P1, P2 mitberücksichtigt werden. Bei einer Betrachtung der Radien Ra, Rb, ..., Ri ist der Tabelle eindeutig zu entnehmen, dass dem Signal P2 entweder das Symbol $S_{57}$ oder das Symbol $S_{75}$ zugeordnet werden kann. Die ge-meinsame Betrachtung von Differenzwinkel $\angle$(P1, P2) und Radius von P2 lässt nur das Symbol $S_{57}$ als zweiten Partner des Paares (S1, S2) zu, womit der Solldiffe-renzwinkel $\angle$($S_{11}$, $S_{57}$) 9,5 Grad beträgt, was eine Winkelabweichung von 12 Grad - 9,5 Grad = +2,5 Grad bedeutet. Diese auf den Vollkreis bezogene Winkelabweichung ergibt multipliziert mit der Symbolfrequenz $f_{Symbol}$ die Frequenzabweichung zwischen empfangenem Träger und lokalem Oszillator 7 der Schaltungsanordnung 1, also $\Delta f$ = 2,5 Grad / 360 Grad * $f_{Symbol}$. Wie Fig. 2 zu entnehmen ist, befindet sich der zweite empfangene Signalwert P2 nicht exakt auf einem Sollradius. Daher werden zweckmäßigerweise um jeden Sollradius Toleranzbereiche eingerichtet, innerhalb derer angenommen wird, dass die empfangenen Signale zu einem Symbol auf diesem Sollradius gehören. Dadurch wird die Anzahl der für den Vergleich des gemessenen Differenzwinkels zu betrachtenden Solldifferenzwinkel entsprechend verringert. Die Toleranzbereiche können so gestaltet sein, dass sie mit besonderem Vorteil bis zum halben Abstand zum benachbarten Sollradius gehen und dort eine Entscheidungsgrenze definieren. Sie können auch durch eine feste oder eine beispielsweise an die Empfangsbedingungen anpassbare variable Radiusdifferenz gebildet werden, die auch in die Richtungen größerer und kleinerer Radien unterschiedlich sein kann. Die so gebildeten Toleranzbereiche können sich auch überlappen, was dazu führt, dass entsprechend mehr Solldifferenzwinkel für die Entscheidung zu betrachten sind. Signalwerte in der Umgebung nah benachbarter Radien oder sonst in der Auswertung unsichere Signalwerte können auch von der Auswertung ausgeschlossen werden. Ferner könnte eine Berücksichtigung nur innerhalb von gewissen Toleranzdifferenzwinkeln zur weiteren Beschränkung bei höherwertigen Modulationsverfahren zweckmäßig sein.

Nach der Bestimmung des Frequenzoffsets $\Delta f$ kann direkt eine Korrektur des zweiten empfangenen Signalwertes P2 auf die korrekte Position des korrekten Signalwertes P2* vorgenommen werden. Möglich ist auch die weitere Verwendung des bestimmten Fre-quenzoffsets $\Delta f$ in der Vergleichseinrichtung 55, um für nachfolgende Signalverarbeitungsschritte diesen Fre-quenzoffset $\Delta f$ von vornherein als Korrekturgröße zu verwenden.

Da die Betrachtung der Winkelabweichung zwischen den Winkeln empfangener Signale und Sollwinkeln entsprechender Symbole von dem Quadranten der komplexen Ebene unabhängig ist, können vorteilhafterweise alle empfangenen Signale in einen einzigen Quadranten der komplexen Ebene hinein gedreht werden, wie dies am Beispiel des empfangenen Symbols P1* skizziert ist, und Ortswinkel auf einen Bereich zwischen 0° und 90° bzw. Differenzwinkel entsprechend auf einen Bereich zwischen - 90° und + 90°abgebildet werden.

Vorteilhafterweise wird somit für ein empfangenes komplexes Signal keine direkte Entscheidung auf ein Symbol des Alphabets vorgenommen, sondern es werden zunächst die im Symbolalphabet vorkommenden Sollradien bestimmt, die für jeden Signalwert infrage kommen. Für zwei direkt oder beabstandet aufeinander folgende Signalwerte P1, P2 wird dann der Win-kel $\angle$(P1, P2) bestimmt. Zu diesem Winkel wird vorzugsweise unter Berücksichtigung der zugeordneten möglichen Radien ein Vergleich mit allen vorkommen-den Sollwinkeln $\angle$(S1, S2) vorgenommen, welche eine beliebige Kombination der Sollpunkte auf Radien, die für erste Signalwerte P1 infrage kommen, und Radien, die für zweite Signalwerte P2 infrage kommen, erzeugen können. Nach der Entscheidung für einen der Ta-belle entnehmbaren Sollwinkel $\angle$(S1, S2) als nächst-

kommendem Winkel zu dem gemessenen Winkel ∠(P1, P2) sind die empfangenen Symbole bzw. entsprechende Signalwerte P1, P2 unabhängig von der momentanen Lage im Phasenraum identifiziert.

Die Winkelabweichungen der Winkel ∠(P1, P2) zu den wahrscheinlichsten Sollwinkeln ∠(S1, S2) verschiedener empfangener Signalpaare werden gleich sein und geben direkt ein Maß für die Frequenzabweichung an, wie dies aus Fig. 3 ersichtlich ist. Die absolute Winkellage der Istsymbole bzw. Sollsymbole ist dabei irrelevant. In Fig. 3 ist eine Abbildung eines 16-QAM-Systems aller möglicher Winkel ∠(S1, S2) zwischen Punkten eines Quadranten auf allen Radien dargestellt. Abgebildet ist eine Häufigkeitsverteilung über dem in Grad dargestellten Winkelbereich. Wiederum sind mit durchgezogenen Linien entsprechende Lagen in dem SollKoordinatensystem angegeben, während mit einer gestrichelten Linie ein Empfangswinkel ∠ (P1, P2) im rotierten Empfangs-Koordinatensystem dargestellt sind. Die Sollwinkel liegen bei - 63, 4°, -53, 1°, -36, 9°, -26,6°, 0°, 26, 6°, 36, 9°, 53,1° und 63,4°. 90° entspricht 0°. Gut ersichtlich ist der beispielhaft gemessene dargestellte Winkel ∠(P1, P2) der empfangenen Signale P1 und P2 mit einem Winkel von 31°. In diesem Beispiel sei der Sollwinkel von 26° mit in der Menge, die durch die Vorauswahl infrage kommender Radien gegeben ist. Der Differenzwinkel von 4,4° zwischen dem Sollwinkel ∠ (S1, S2) bei 26,6° und dem bestimmten Winkel ∠(P1, P2) bei 31° der empfangenen Signalwerte P1, P2 wird mit Hilfe einer derartigen Abbildung, auch rechentechnischen Abbildung, einfach ermittelbar, um sie anschließend zur Frequenzkorrektur zu verwenden. Bei der Betrachtung mehrerer Differenzwinkel von aufeinanderfolgenden Messungen kann auch eine Mittelung oder Auswahl der Winkelabweichungen vorgenommen werden, um einzelne Ausreißer ausmitteln oder entfernen zu können. Betrachtet werden können außerdem Differenzwinkel zwischen bestimmten Winkeln verschiedener gemessener Signalpaare und entsprechenden Winkeln zugeordneter Sollsymbolpaare.

Betrachtet werden kann auch eine Verkettung von einzelnen Winkelbestimmungen für aufeinanderfolgende Paare, beispielsweise mit Hilfe eines für sich bekannten Viterbi-Algorithmus. Dies führt auch bei hohen Frequenzabweichungen oder der Einbeziehung mehrerer benachbarter Radien in die Entscheidung zu richtigen Ergebnissen. Fehlerhafte Entscheidungen bei der Zuordnung eines bestimmten Winkels zu einem falschen Sollwinkel treten unter Umständen bei sehr großen Frequenzfehlern auf, bei denen die Rotation des Koordinatensystems zwischen zwei Symbolen in die Größenordnung des Differenzwinkels von zwei benachbarten Symbolen S2, S2* auf einem Radius Rh kommt.

Die so gewonnenen Winkelentscheidungen identifizieren auch die beteiligten und ggfs. bei der Vorverarbeitung interpolierten Symbole Se, insbesondere bei Verwendung einer verketteten Entscheidung mit der Betrachtung mehrerer bestimmter Winkel oder der Einbeziehung der Radieninformation in die Entscheidung. Daher führt der Verfahrensablauf oder ein entsprechender Algorithmus zu einer Demodulation bzw. Symbolbestimmung schon während der Synchronisationsphase, ohne dass vorher eine Frequenzkorrektur durchgeführt werden muss. Außerdem ist es möglich, die aus der Identifikation der bei der Differenzbildung beteiligten Symbole gewonnenen absoluten Winkelinformation des empfangenen Signals zum entsprechenden Sollsymbol zur Phasenregelung zu verwenden.

Wurde die Winkelbetrachtung nur in einem Quadranten durchgeführt, beispielsweise ein empfangenes Symbol P1* aus dem zweiten in den ersten Quadranten verlagert, werden zur Ermöglichung der direkten Weiterverarbeitung der so bestimmten Symbole in nachfolgenden Signalverarbeitungseinrichtungen schon während der Synchronisationsphase der Schaltungsanordnung 1 diese anschließend in die richtigen Quadranten zurückgedreht.

Nach der Kompensation der Frequenzdifferenz und möglicherweise auch der Phasendifferenz zwischen Träger des Empfangssignals und dem lokalen Oszillator 7 findet zweckmäßigerweise das Einrasten der träger-phasengekoppelten Schleife durch Zuführen des durch übliche Symbolentscheidung in für sich bekannter Art und Weise gewonnenen Phasendifferenzsignals Δγ zur Trägerregeleinrichtung 8 statt. Die Trägerregelschaltung 8 ist so geschaltet, dass die Frequenzdifferenzinformation aus der anfänglichen Frequenzregelung z. B. im Integrator 84 auch nach dieser Umschaltung auf Phasenregelung mit dem Winkelfehler Δγ als Eingangssignal erhalten bleibt.

Für den Fachmann sind diverse alternative Schaltungsanordnungen zur Umsetzung des Verfahrens aufbaubar. Beispielsweise kann die Taktsteuereinrichtung 21 einen zentral geregelten Abtast- und Digitalisierungstakt in Form des Abtastsignals $t_i$ bereitstellen, welcher dem AD-Umsetzer 3 zugeführt wird. Wenn das Abtastsignal $t_i$ auf den Takt für das empfangene Symbol bzw. Signal sa synchronisiert wird, kann auch eine spätere Interpolation in der Abtasteinrichtung 10 entfallen. Der Tiefpass 9 nach dem Quadraturumsetzer 6 ist dann ebenfalls nicht mehr erforderlich. Seine begrenzende Wirkung übernimmt der Tiefpass 11 mit der Nyquist-Charakteristik. Insbesondere ist es möglich, bei alternativen Ausführungsanordnungen die Schnittstelle für die Digitalisierung, d. h. den AD-Umsetzer 3, auch erst nach dem Quadraturumsetzer 6 einzusetzen, beispielsweise dann, wenn die Zwischenfrequenzlage des von der Signalquelle 2 gelieferten Eingangssignals sa zu hoch ist.

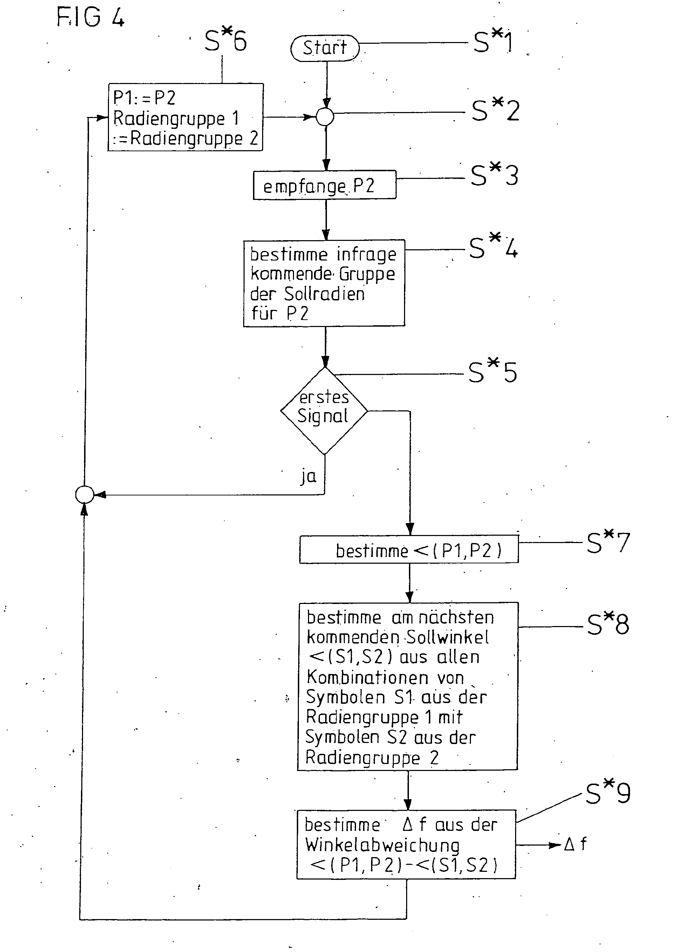

Bei einem beispielhaften Verfahrensablauf und gemäß Fig. 4 wird nach dem Start (S*1) mit dem Empfang von Symbolen P1, P2 begonnen (S*2). Nachfolgend wird eine infrage kommende Gruppe von Sollradien für das empfangene Symbol P2 bestimmt (S*4). Handelt es sich um das erste Signal bzw. Symbol, wird in einem Abfrageschritt S*5 ein Rücksprung vorgenommen. In diesem Fall wird in einem weiteren Schritt S*6 eine Variable für ein erstes Symbol P1 mit dem zuvor empfangenen Wert des zuvor empfangenen Symbols P2 festgelegt und als erste Radiengruppe die im vierten Schritt S*4 bestimmte Gruppe der Sollradien definiert. Fortgesetzt wird das Verfahren dann mit dem Schritt des Empfangens von Signalwerten bzw. Symbolen P2 (S*3).

Handelt es sich beim Abfrageschritt S*5 nicht um das erste Signal, wird der Differenzwinkel $\angle$(P1, P2) zwischen den Signalwerten bzw. Symbolen bestimmt (S*7). Nachfolgend (S*8) wird der am nächsten kommende Sollwinkel $\angle$(S1, S2) aus allen Kombinationen von Symbolen S1 aus der ersten Radiengruppe mit Symbolen S2 aus der zweiten Radiengruppe bestimmt. Aus dieser Winkelabweichung ($\angle$(P1, P2) - $\angle$(S1, 2)) wird letztendlich auf den Frequenzoffset $\Delta$f geschlossen. Dieser Frequenzoffset $\Delta$f wird ausgegeben. Außerdem wird zum Schritt des Festlegens der Grundparameter S*6 und des Empfangens von Symbolen S*3 zurückgeschritten.

**Patentansprüche**

1. Verfahren zum Bestimmen der Frequenz eines empfangenen Signals zum Demodulieren von empfangenen Signalwerten (P1, P2) im komplexen Phasenraum (I, Q) eines Modulationsverfahrens (QAM), bei dem zur Frequenzbestimmung die empfangenen Signalwerte (P1, P2) mit Symbolen (S1, S2) auf Sollpositionen ($S_{11}$ bzw. $S_{57}$) im komplexen Signalraum (I,Q; R, $\alpha$) verglichen werden (S6), **dadurch gekennzeichnet , dass**

   - von zumindest zwei empfangenen Signalwerten (P1, P2) der Winkel ($\angle$(P1, P2)) zwischen diesen bestimmt wird (S5),
   - der bestimmte Winkel ($\angle$(P1, P2)) mit für das Modulationsverfahren (QAM) möglichen Sollwinkeln ($\angle$($S_{xy}$, $S_{xy}$)) verglichen wird (S7) und
   - eine zu dem passendsten Sollwinkel ($\angle$) (S1, S2) bestehende Winkelabweichung ($\angle$(S1, S2) - $\angle$(P1, P2)) als Maß für einen Frequenzoffset ($\Delta$f) verwendet wird (S8).

2. Verfahren nach Anspruch 1, bei dem der bestimmte Winkel ($\angle$(P1, P2)) zu mit vorgegebenen Abständen aufeinanderfolgend empfangenen Signalwerten (P1, P2) bestimmt wird und mit entsprechend möglichen Sollwinkeln ($\angle$($S_{xy}$, $S_{xy}$)) verglichen wird.

3. Verfahren nach Anspruch 1 oder 2, bei dem der bestimmte Winkel ($\angle$(P1, P2)) zu empfangenen Signalwerten (P1, P2) im Bereich verschiedener für das Quadraturmodulationsverfahren (QAM) möglicher Radien (Ra, Rh) bestimmt und mit entsprechend möglichen Sollwinkeln ($\angle$(S1, S2)) verglichen wird.

4. Verfahren nach einem vorstehenden Anspruch, bei dem der bestimmte Winkel ($\angle$(P1, P2)) zu empfangenen Signalwerten auf am im Symbolalphabet am eindeutigsten bestimmbaren Radien (Ra, Rb, Rh, Ri) bestimmt wird.

5. Verfahren nach einem vorstehenden Anspruch, bei dem der bestimmte Winkel ($\angle$(P1, P2)) zu empfangenen Signalwerten (P1, P2) im Bereich von Positionen ausgewählter Sollsymbole (S1, S2) bestimmt wird.

6. Verfahren nach einem vorstehenden Anspruch, bei dem eine Vielzahl von Winkeln ($\angle$(P1, P2)) zur gemeinsamen und/oder iterativen Verbesserung der Frequenzbestimmung bestimmt, verglichen und unter gemeinsamer Berücksichtigung zur Bestimmung des Frequenzoffsets ($\Delta$f) verwendet wird.

7. Verfahren nach einem vorstehenden Anspruch, bei dem die Winkelabweichung ($\angle$(S1, S2) - $\angle$(P1, P2)) zur einmaligen Frequenzkorrektur und Demodulation und/oder als Eingangssignal für eine zukünftige Frequenzregelung ausgegeben und verwendet wird.

8. Verfahren nach einem vorstehenden Anspruch, bei dem die aus dem Winkel ($\angle$(P1, P2)) abgeleitete Information zur Identifikation der beteiligten Symbole verwendet wird.

9. Verfahren nach einem vorstehenden Anspruch, bei dem die Positionen empfangener Symbole (P1*) zum Bestimmen des Winkels in einen einzigen Quadranten der komplexen Ebene (I, Q) abgebildet werden.

10. Verfahren nach Anspruch 9, bei dem nach der Winkelbestimmung in nur einem Quadranten anschließend vor der weiteren Signalverarbeitung die Vorzeichen eines bestimmten Symbols wieder passend hinzugefügt werden oder das Symbol wieder in den richtigen Quadranten gedreht wird.

11. Verfahren nach einem vorstehenden Anspruch, bei dem nur empfangene Signalwerte (P1, P2) innerhalb von Toleranzbereichen ($\Delta$R) um mögliche Sollradien berücksichtigt werden.

12. Verfahren nach einem vorstehenden Anspruch, bei dem empfangene Signalwerte (P1, P2) innerhalb von Toleranzbereichen ($\Delta$R) um mögliche Sollradien Radiengruppen zugeordnet werden, mittels derer eine Auswahl von Sollwinkeln definiert wird.

13. Schaltungsanordnung zum Bestimmen der Frequenz einer Schaltungsanordnung zum Demodulieren von empfangenen Signalen (P1, P2) im komplexen Phasenraum (I, Q; R, $\alpha$) eines Modulationsverfahrens (QAM) mit

- einer Frequenzbestimmungseinrichtung (50) zum Bestimmen des Winkels ($\angle$(P1, P2)) zwischen zwei empfangenen Signalwerten (P1, P2) in der komplexen Ebene,
- einer Sollwinkel-Bereitstellungseinrichtung (M, 53) zum Abspeichern von Sollwinkeln (Z(Sx, Sy)) zu verschiedenen Kombinationen von Symbolen (S1, S2) entsprechend Sollpositionen für das Quadraturmodulationsverfahren (QAM) und optional Abspeichern von zugeordneten Radien (Ra, ..., Rh) und
- einer Steuereinrichtung (C) zum Zuordnen des bestimmten Winkels ($\angle$(P1, P2)) zu zumindest einem naheliegenden entsprechenden Sollwinkel ($\angle$(S1, S2)) aus dem Speicher und zur Bestimmung einer Winkelabweichung ($\angle$(S1, S2) - $\angle$(P1, P2)) zwischen diesen als Maß für einen Frequenzoffset ($\Delta$f), insbesondere zum Durchführen eines Verfahrens gemäß einem der vorstehenden Ansprüche.

FIG 1

# FIG 2

# FIG 3

## FIG 4

```
                                    ( Start )  ———— S*1
         S*6
P1:=P2
Radiengruppe 1      ———O ———— S*2
:=Radiengruppe 2

                    empfange P2  ———— S*3

                    bestimme infrage  ———— S*4
                    kommende Gruppe
                    der Sollradien
                    für P2

                        / erstes \  ———— S*5
                        \ Signal /

                    ja

                    bestimme <(P1,P2)  ———— S*7

                    bestimme am nächsten  ———— S*8
                    kommenden Sollwinkel
                    <(S1,S2) aus allen
                    Kombinationen von
                    Symbolen S1 aus der
                    Radiengruppe 1 mit
                    Symbolen S2 aus der
                    Radiengruppe 2

                    bestimme Δf aus der  ———— S*9
                    Winkelabweichung        ——→ Δf
                    <(P1,P2)-<(S1,S2)
```

FIG 5

FIG 6